# EUROPÄISCHE PATENTSCHRIFT

(11) **EP 2 016 719 B1**
(45) Veröffentlichungstag und Bekanntmachung des Hinweises auf die Patenterteilung: **06.05.2015**
(21) Anmeldenummer: 07704227.3
(22) Anmeldetag: 30.01.2007
(51) Int. Cl.: H04L 12/911

(54) **VERFAHREN, NETZAGENT UND BANDBREITENBROKER ZUM VERWALTEN DER VERFÜGBAREN BANDBREITE FÜR VERBINDUNGEN ZWISCHEN ENDGERÄTEN EINES PAKETORIENTIERTEN KOMMUNIKATIONSNETZES**
METHOD, NETWORK AGENT AND BANDWIDTH BROKER FOR MANAGING THE AVAILABLE BANDWIDTH FOR CONNECTIONS BETWEEN TERMINALS IN A PACKET-ORIENTED COMMUNICATION NETWORK
PROCÉDÉ, AGENT DE RÉSEAU ET GESTIONNAIRE DE BANDE PASSANTE POUR LA GESTION DES LARGEURS DE BANDE DISPONIBLES POUR DES CONNEXIONS ENTRE DES TERMINAUX D'UN RÉSEAU DE COMMUNICATION ORIENTÉ PAR PAQUETS

(30) Priorität: 09.05.2006 DE 102006021595
(43) Veröffentlichungstag der Anmeldung: 21.01.2009
(73) Patentinhaber: Siemens Aktiengesellschaft, 80333 München (DE)
(72) Erfinder: BRANDT, Thomas, 24537 Neumünster (DE); MESSNER, Markus, A-2362 Biedermannsdorf (AT); SCHWARZ, Maria, A-1230 Wien (AT); TOTZKE, Jürgen, 85586 Poing (DE)
(74) Vertreter: Fritzsche, Thomas
(86) Internationale Anmeldenummer: PCT/EP2007/050874
(87) Internationale Veröffentlichungsnummer: WO 2007/128595

(56) Entgegenhaltungen:
- DE-C1- 10 038 878
- US-A1- 2003 028 641
- US-A1- 2005 114 541
- JUNSEOK HWANG ET AL: "An implementation study of a dynamic inter-domain bandwidth management platform in diffserv networks" NETWORK OPERATIONS AND MANAGEMENT SYMPOSIUM, 2004. NOMS 2004. IEEE/IFIP SEOUL, KOREA APRIL 19-23, 2004, PISCATAWAY, NJ, USA,IEEE, Bd. 1, 19. April 2004 (2004-04-19), Seiten 321-334, XP010712696 ISBN: 0-7803-8230-7

## Beschreibung

In zunehmendem Maße wachsen traditionelle leitungsvermittelte Telefonnetze ("circuit switched") und paketvermittelte Datennetze ("paket switched") zusammen. Ein Grund hierfür ist, dass sich durch die Zusammenlegung beider Netze zu nur einem Netz Kosten für Installation, Wartung und Ausbau sparen lassen, denn diese fallen nicht mehr für zwei Netze, sondern nur noch für eines an. Ein anderer Grund ist, dass mehr und mehr Sprachkommunikation schon auf Teilnehmerseite paketvermittelt stattfindet ("Voice over IP", kurz: "VoIP"). Damit bietet sich der Einsatz dieser Technik auf Ebene des Netzwerkes an.

In paketvermittelten Netzen werden für die Sprachübertragung erheblich weniger Daten übertragen, was schon einem erheblichen möglichen Effizienzgewinn entspricht. Dies wird erreicht durch verschiedene Komprimierungsverfahren (sog. "Codecs" für "Coder-Decoder"). Zur Datenkomprimierung finden verschiedenste Codecs Anwendung. Der Codec G.711 z.B. arbeitet mit einer Sampling-Rate von 64 kHz, der Codec G.729 z.B. hat lediglich eine Sampling-Rate von 8 kHz.

Auch werden verschiedene Protokolle verwendet. Ein Beispiel hierfür ist das H.323-Protokoll, das von der ITU geschaffen wurde. Dieses Protokoll umfasst wiederum verschiedene Unterprotokolle, die für verschiedene Anwendungen genutzt werden, wie z.B. H.261 für Video, G.711 für Audio, T.122 für Daten und H.225 für die Signalisierung. Eine Alternative zum H.323-Protokoll ist das so genannte Session-Initiation-Protocol (SIP).

Während bestimmte Anwendungen im Netzbereich, z. B. Video on Demand, keine besonderen Echtzeitanforderungen an das Netz stellen, stellt die Sprachübertragung hohe Echtzeitanforderungen, da bereits kurze Verzögerungen vom Menschen als störend während eines Telefongesprächs empfunden werden.

Um insbesondere für Sprachverbindungen eine hohe Qualität zu ermöglichen, sind verschiedene Ansätze entwickelt worden, die sich alle mit der Dienstqualität ("Quality of Service") befassen. Hierzu zählen zum Beispiel:
- Möglichkeiten, Datenstaus zu verringern, bzw. deren Auftreten von vornherein zu vermeiden ("Congestion Management"),
- Datenverkehr entsprechend sog. Service Levels zu behandeln; hierbei wird für den Datenverkehr zwischen verschiedenen Service Levels unterschieden; für die jeweiligen Service Levels werden verschiedene Warteschlangen ("Queues") z.B. in Routern eingerichtet und entsprechend abgearbeitet ("Classification and Queuing Techniques"),
- Die Verwendung von Identifikatoren für Pakete, die einen bestimmten Weg des Pakets durch das Netzwerk entlang von Netzknoten angeben ("Packet Tagging/Label Switching")
- Die Bereitstellung von Bandbreite in allen Bereichen des Netzes, sowohl in bandbreitenkritischen als auch in bandbreitenunkritischen Bereichen des Netzes ("Overprovisioning").

Eine durchgängige Ende-zu-Ende Methode, um Bandbreite über verschiedene Domänen hinweg zu verwalten, um für insbesondere echtzeitkritische Verbindungen die Verfügbarkeit einer angeforderten Bandbreite zu gewährleisten, ist in paketorientierten Kommunikationsnetzen bislang nicht bekannt.

Der von dem ETSI ("European Telecommunications Standards Institute") entwickelte TIPHON-Standard ("Telecommunications and Internet Protocol Harmonization over Networks"), konnte sich bislang - nicht zuletzt aufgrund seiner Komplexität - nicht durchsetzen.

Andere bisherigen Ansätze zur Lösung dieses Problems sehen allesamt Insellösungen vor, die bei vermaschten Netzstrukturen, die z.B. durch verschiedene administrative Domänen gekennzeichnet sind, nicht greifen. Bei jedem Aufbau einer Verbindung muss eine Anfrage zur Reservierung der Bandbreite erfolgen. In den Insellösungen ist diese immer eine Reservierungsanfrage an das netzweite Bandbreiten-Management. Dadurch müssen alle Anfragen jeweils durch das ganze Netz getragen werden. Auch bei Anfragen, die eigentlich keine Reservierung benötigen, gehen diese durch das gesamte Netz.

In JUNSEOK HWANG ET AL: "An Implementation Study of a Dynamic Inter-Domain Bandwidth Management Platform in Diffserv Networks" NETWORK OPERATIONS AND MANAGEMENT SYMPOSIUM, 2004. NOMS 2004. IEEE/IFIP SEOUL, KOREA APRIL 19-23, 2004, PISCATAWAY, NJ, USA,IEEE, Bd. 1, 19. April 2004 (2004-04-19), Seiten 321-334, ISBN: 0-7803-8230-7, wird die Skalierbarkeit und Effizienz eines skalierbaren Bandbreitenmanagement Punktes (BMP) für eine garantierte Dienstgüte in DiffServ-Netzwerken bewertet. Der interne BMP verwendet zentralisierte Netzwerkstatuswartung und leitungsbasierte Intra-Domain- Ressourcen-Management-Schemata, die die Zulassungssteuerungszeit deutlich reduzieren und die in der früheren Forschung vorliegenden Skalierbarkeitsprobleme reduzieren. Für Inter-Domain-Kommunikation eines externen BMP wird hingegen ein Einfaches Inter-Domain-Bandbreite Broker Signaling (SIBBS) Protokoll implementiert.

Der Erfindung liegt die Aufgabe zugrunde, die Gewährleistung ausreichender Bandbreite und daraus resultierende Dienstqualität in paketvermittelten Kommunikationsnetzen für echtzeitkritische Kommunikationsdatenübertragung zu verbessern. Die Aufgabe wird hinsichtlich des erfindungsgemäßen Verfahrens durch die Merkmale des Anspruchs 1, hinsichtlich des erfindungsgemäßen Netzagenten durch die Merkmale des Anspruchs 16 und hinsichtlich des erfindungsgemäßen Kommunikationsnetzes durch die Merkmale des Anspruchs 20 gelöst.

Ein wesentlicher Vorteil des erfindungsgemäßen Verfahrens besteht darin, dass bei einer Zuordnung von bandbreitenunkritischen Bereichen zu Netzagenten bei einer Initialisierung einer virtuellen Verbindung die angeforderte Bandbreite durch den Netzagenten ohne Überprüfung als verfügbar angezeigt wird, wodurch das paketorientierte Kommunikationsnetz und auch die Bandbreitenbroker bzw. übergeordneten Bandbreitenbroker durch die nicht mehr erforderlichen Ressourcenanfragen im Kommunikationsnetz erheblich dynamisch entlastet werden. Ein weiterer Vorteil ist die gute Skalierbarkeit des erfindungsmäßigen strukturierten Verfahrens.

Nach einer vorteilhaften Ausgestaltung des erfindungsgemäßen Verfahrens wird das Kommunikationsnetz in Teilbereiche unterteilt und diesen jeweils ein Bandbreitenbroker zugeordnet. Eine Ressourcenanfrage, bei der die zu initialisierende Verbindung über den zugeordneten Teilbereich hinaus geführt wird, wird an einen übergeordneten Bandbreitenbroker geleitet. Dieser ermittelt mit Hilfe einer weiteren Topologiefunktion die in die Verbindung einbezogenen Teilbereiche und fragt die zugeordneten Bandbreitenbroker hinsichtlich der Verfügbarkeit der angeforderten Bandbreite parallel an.

Durch die dadurch zielgerichtete Kommunikation werden die Bandbreitenbroker und das Kommunikationsnetz weiter dynamisch entlastet und die erforderliche Rechenleistung für die Ermittlung der Verfügbarkeit der angeforderten Bandbreiten in den Bandbreitenbrokern verringert.

Weitere vorteilhafte Weiterbildungen des erfindungsgemäßen Verfahrens sind den weiteren Ansprüchen zu entnehmen.

Im Folgenden wird das erfindungsgemäße Verfahren anhand einer zeichnerischen Darstellung näher erläutert.

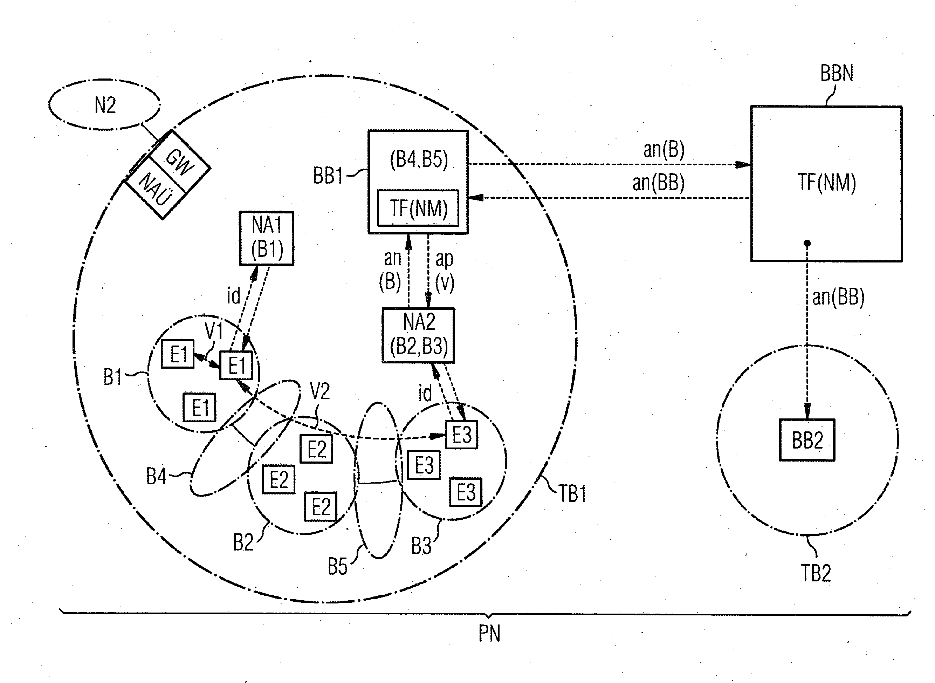

Die Figur zeigt zwei Teilbereiche TB1, TB2 eines internetorientierten Paketnetzes PN, beispielsweise ein Intranet, bei dem das SIP-Protokoll verwendet wird, aber auch die Benutzung eines anderen Multimedia-Signalisierungsprotokolls, wie etwa H.323 ist möglich.

Für das Ausführungsbeispiel sei angenommen, dass der erste Teilbereich TB1 drei bandbreitenunkritische Bereiche B1..B3 aufweist und in jedem der Bereiche B1..B3 Endgeräte E1..E3 angeordnet sind, wobei in der Figur beispielhaft im ersten Bereich B1 einige Endgeräte E1, im zweiten Bereich B2 einige Endgeräte E2 und im dritten Bereich einige Endgeräte E3 dargestellt sind. Bei einem bandbreitenunkritischen Bereich ist zumindest ausreichend Bandbreite für anforderbare Bandbreiten der diesem Bereich zugeordneten Endgeräte E1..E3 für Verbindungen verfügbar. Ein derartiger bandbreitenunkritischer Bereich ist beispielsweise durch ein Gigabit-Ethernet realisiert, bei dem für die zugeordneten Endgeräte sehr viel mehr Bandbreite zur Verfügung steht als von den Endgeräten für Verbindung zwischen den Endgeräten angefordert werden kann. Im ersten Teilbereich TB1 sind zur Erläuterung der Erfindung beispielhaft zwei Netzagenten NA1..NA2 dargestellt, wobei aufgrund von gerätetechnischen und topologischen Randbedingungen beispielhaft der erste Netzagent NA1 den ersten Bereich B1, der zweite Netzagent NA2 den zweiten und den dritten Bereich B2, B3 verwaltet. Die Verwaltung umfasst die Kenntnisse darüber, welche der Endgeräte E1..E3 in welchem bandbreitenunkritischen Bereich B1..B3 angeordnet sind.

Für das Ausführungsbeispiel sei zur Erläuterung der Erfindung weiterhin angenommen, dass zwischen dem ersten und dem zweiten Bereich B1, B2 ein vierter, bandbreitenkritischer Bereich B4 und zwischen dem zweiten und dritten Bereich B2, B3 ein fünfter bandbreitenkritischer Bereich B5 aufgrund der Netztopologie liegt. Ein bandbreitenkritischer Bereich ist beispielsweise durch Verbindungsleitungen zwischen den bandbreitenunkritischen Bereichen realisiert, bei denen nur eine begrenzte Bandbreite für angeforderte Bandbreiten für Verbindungen zwischen den Endgeräten verfügbar ist. Die bandbreitenkritischen Bereiche B4, B5 verwaltet ein dem ersten Teilbereich TB1 zugeordneter erster Bandbreitenbroker BB1 - in der Figur durch die Bezeichnung BB1(B4, B5) angedeutet. Verwalten bedeutet Kenntnisse über die verfügbare Bandbreite in diesen Bereichen und zusätzlich über die bereits belegte Bandbreite durch bestehende Verbindungen zwischen Endgeräten. Die Kenntnisse über die verfügbare Bandbreite in den bandbreitenkritischen Bereichen B4, B5 werden mit Hilfe einer Topologiefunktion TF erlangt. Die Topologiefunktion TF beinhaltet ein Netzmodell NM, das in den ersten Bandbreitenbroker BB1 beispielsweise mit Hilfe des Kommunikationsnetzes PN eingebracht und auch aktualisiert wird. Die Aktualisierung kann regelmäßig, unregelmäßig, bei Bedarf oder besonders vorteilhaft bei Konfigurations- bzw. Netztopologieänderungen insbesondere hinsichtlich der Bandbreite durchgeführt werden.

Für das Ausführungsbeispiel sei in einer ersten Variante angenommen, dass eine erste Verbindung zwischen den ersten Endgeräten E1 im ersten bandbreitenunkritischen Bereich B1 initialisiert werden soll - in der Figur durch eine mit V1 bezeichnete Linie angedeutet.

Vorteilhaft ist der Netzagent NA1 beispielsweise in einem SIP-Proxy verwirklicht und verfolgt dort den Signalisierungsdatenverkehr, der die Endgeräte E1 des Bereichs B1 betrifft.

Hierbei wird eine an das gerufene Endgerät E1 gerichtete SIP-Signalisierung von dem zugeordneten Netzagenten NA1, als echtzeitkritisch identifiziert - in der Figur durch einen mit id bezeichneten, gestrichelten Pfeil angedeutet.

Der Netzagent NA1 des gerufenen Endgerätes E1 wertet dann die Ursprungs- und Zieladressen der SIP-Signalisierung aus. Wird dabei festgestellt, dass die an der ersten Verbindung V1 beteiligten Endgeräte E1 im ersten bandbreitenunkritischen Bereich B1 liegen, wird die SIP-Signalisierung für die zu initialisierende Verbindung V1 an das gerufene Endgerät E1 weitergeleitet, damit die Verbindungsinitialisierung fortgesetzt werden kann - in der Zeichnung durch eine gepunktete Linie dargestellt. Eine Überprüfung der Verfügbarkeit der für die Verbindung V1 vorgesehenen Bandbreiten findet hierbei nicht statt.

Nach einer zweiten Variante des Ausführungsbeispiels sei angenommen, dass eine zweite Verbindung zwischen einem ersten Endgerät E1 im ersten Bereich B1 und einem dritten Endgerät E3 im dritten Bereich B3 durchgeführt werden soll - in der Figur durch eine mit V2 bezeichnete Linie dargestellt. Vorteilhafterweise behandelt wieder nicht der zugeordnete erste Netzagent NA1, sondern der zugeordnete zweite Netzagent NA2 des gerufenen Endgerätes E3 die in der SIP-Signalisierung enthaltenen Informationen für die vorgesehene Verbindung V2 und identifiziert diese als echtzeitkritisch - in der Figur durch einen id bezeichneten Pfeil dargestellt. Denn nur dieser zweite Netzagent NA2 kennt - etwa im Fall einer für das gerufene Endgerät E3 geschalteten Rufweiterleitung oder Mobilität des gerufenen Endgerätes E3 - den endgültigen Zielpunkt einer aufzubauenden Verbindung.

Zunächst leitet der zweite Netzagent NA2 die Verbindungssignalisierung an das gerufene Endgerät E3 nicht weiter. Vielmehr bildet er zunächst ein Ressourcenanfragepaket an(B) mit der angeforderten Bandbreite B und sendet es zusammen mit den angegebenen Netzadressen der beiden Endgeräte E1, E3 an den zugeordneten ersten Bandbreitenbroker BB1 - in der Figur durch einen mit an(B) bezeichneten, gestrichelten Pfeil dargestellt.

In dem ersten Bandbreitenbroker BB1 wird anhand der angegebenen Adressen der beiden Endgeräte E1, E3 mit Hilfe des Netzmodells NM bzw. der Topologiefunktion TF ermittelt, über welche bandbreitenkritischen und bandbreitenunkritischen Bereiche B die Verbindung V2 im ersten Teilbereich TB1 erfolgen wird. Hierdurch wird ermittelt bzw. berechnet, dass die Verbindung V2 über den vierten und fünften, bandbreitenkritischen Bereich B4, B5 durchgeführt wird. Anschließend wird überprüft, wie viel Bandbreite in diesen beiden Bereichen B4, B5 noch verfügbar sind. Hierbei wird die gesamte verfügbare Bandbreite in den beiden Bereichen B4, B5 sowie die Bandbreite berücksichtigt, die bereits für Verbindungen zwischen anderen Endgeräten des Kommunikationsnetzes PN belegt sind.

Entspricht die verfügbare Bandbreite der angeforderten Bandbreite für die angeforderte Verbindung V2, so wird eine die Verfügbarkeit v anzeigendes Antwortpaket ap von dem ersten Bandbreitenbroker BB1 an den Netzagenten NA2 übermittelt - in der Figur durch einen mit ap(v) bezeichneten, gestrichelten Pfeil angedeutet. Nach dem Empfang des Antwortpakets ap(v) leitet der Netzagent NA2 nun die SIP-Signalisierung an das Endgerät E3 weiter - in der Figur durch eine gepunktete Linie dargestellt. Damit kann die Initialisierung der Verbindung V2 fortgesetzt werden.

Im ersten Bandbreitenbroker BB1 wird die dem ersten Endgerät E1 als verfügbar mitgeteilte Bandbreite B nun als durch die Verbindung V2 belegte Bandbreite im vierten und fünften Bereich B4, B5 berücksichtigt, d.h. die noch verfügbare Bandbreite, die für weitere Verbindungen über den vierten und fünften Bereich B4, B5 verfügbar ist, wird verringert. Dies kann bei einer erneuten Ressourcenanfrage dazu führen, dass eine angeforderte Bandbreite B für eine weitere Verbindung zwischen weiteren Endgeräten in dem vierten und fünften bandbreitenkritischen Bereichen B4, B5 nicht mehr verfügbar ist. In diesem Fall wird im ersten Bandbreitenbroker BB1 ein Antwortpaket ap gebildet und an das anfragende Endgerät übertragen, das die Nichtverfügbarkeit nv der angeforderten Bandbreite B anzeigt. In diesem Fall wird eine Verbindungsinitialisierung für das betroffene Endgerät E nicht zugelassen, bzw. weitergeleitet, da die Verfügbarkeit der angeforderten Bandbreite B nicht gewährleistet ist und dies insbesondere bei Verbindungen für echtzeitkritische Informationen wie Sprache zu Störungen der Sprachübertragung führt.

Wird für eine aufzubauende Verbindung eines ersten Teilbereich TB1 eine Ressourcenanfrage an(B) einen ersten Bandbreitenbroker BB1 übermittelt und wird ein adressiertes Ziel-Endgerät ermittelt, das in einem zweiten Teilbereich TB2 angeordnet ist, wird die Anfrage an(B) einen übergeordneten Bandbreitenbroker BBN übermittelt. In diesem wird anhand eines die beiden Teilbereiche TB1, TB2 umfassenden Netzmodells NM mit Hilfe der angegebenen Adressen der Endgeräte E und einer Topologiefunktion TF ermittelt über welche Teilbereiche TB1, TB2 die Verbindung übertragen wird. Anschließend werden parallel Ressourcenanfragen an(BB) an die Bandbreitenbroker BB1, BB2 der betroffenen Teilbereiche TB1, TB2 mit den Adressen der Endgeräte und der angeforderten Bandbreite B übermittelt - in der Figur durch mit an(BB) bezeichnete, gestrichelte Pfeile angedeutet. Daraufhin wird in den Bandbreitenbrokern BB1, BB2 wie bereits zu der Initialisierung zur ersten und zweiten Verbindung V1, V2 erläutert, die Verfügbarkeit der angeforderten Bandbreite B überprüft und das Überprüfungsergebnis dem übergeordneten Bandbreitenbroker BBN mitgeteilt. Entsprechend der festgestellten Verfügbarkeit wird der zugeordnete Netzagent NA über ein Antwortpaket informiertnicht dargestellt.

Die Initialisierung der Verbindung wird beispielsweise bei einer SIP-Signalisierung im Rahmen der Signalisierung einer virtuellen Verbindung bewirkt. Hierbei ist es vorteilhaft, dass - wie beschrieben - der dem Ziel-Endgerät zugeordnete Netzagent NA die Anfragen an die Bandbreitenbroker BB1, BB2 bzw. den übergeordneten Bandbreitenbroker BBN richtet, um die Verfügbarkeit der angeforderten Bandbreite zu gewährleisten, da hierbei sichergestellt ist, dass keine Rufweiterleitung für das Ziel-Endgerät E eingestellt bzw. dieses als mobiles Endgerät an anderer Stelle registriert ist, und die Anfragen erneut eingeleitet werden müssten.

In einer dritten Variante sei angenommen, dass eine Verbindung - nicht dargestellt - von einem Endgerät E1 aus dem Bereich B1 zu einem Endgerät in einem anderen Netz N2 aufgebaut werden soll. Zwischen dem Bereich B1 und dem anderen Netz N2 besteht eine Verbindungsleitung einschließlich einer Netzübergangseinrichtung GW zur Anpassung der unterschiedlichen Netze PN, N2 - in der Figur durch eine durchgezogene Linie dargestellt.

Bei diesem Netz N2 kann es sich beispielsweise um ein traditionelles TDM-Netz ("time division multiplexing") oder ein anderes Unternehmensnetz handeln, das die hier vorgeschlagene Bandbreitenverwaltung über Netzagenten und Bandbreitenbroker nicht unterstützt, wobei die Netzübergangseinrichtung GW als Gateway realisiert ist.

Um dennoch eine für das Netz PN abschließende Bandbreitenverwaltung vornehmen zu können, ist für diese Fälle wenigstens ein Netzübergangsagent NAÜ der Netzübergangseinrichtung GW zugeordnet. Über diesen Netzübergangsagenten NAÜ werden Verbindungssignalisierungen geführt, die neben dem Netz PN auch noch weitere, andere Netze - wie beispielsweise das Netz N2-betreffen.

Dieser Netzübergangsagent NAÜ identifiziert die netzübergreifende Verbindungssignalisierung echtzeitkritischer Verbindungen und verarbeitet diese entsprechend der oben in den vorhergehenden Varianten des Ausführungsbeispiels dargestellten Grundsätzen. Er ermöglicht also entweder den Verbindungsaufbau ohne weitere Überprüfung oder formuliert eine Ressourcenanfrage und übermittelt diese an den Bandbreitenbroker BB1. Die Besonderheit ist damit nur, dass eine Bandbreitenverwaltung lediglich für die das Netz PN betreffenden Bereich B der aufzubauenden Verbindung, nicht jedoch für die Abschnitte der aufzubauenden Verbindung, die das Netz N2 betreffen, vorgenommen wird.

Das erfindungsgemäße Verfahren ist nicht auf das Ausführungsbeispiel beschränkt, sondern kann in allen paketorientierten Kommunikationsnetzen eingesetzt werden, bei denen die Verfügbarkeit von angeforderten Ressourcen vor einer Verbindung überprüft werden soll. Dieses Verfahren ist vor allem für echtzeitkritische Verbindungen wie Sprachinformationsübermittlung vorteilhaft.

## Patentansprüche

1. Verfahren zum Verwalten der verfügbaren Bandbreite für Verbindungen zwischen Endgeräten eines paketorientierten Kommunikationsnetzes,
- bei dem jeweils eine Anzahl von Endgeräten (E) durch Netzagenten (NA) verwaltet wird, mit Kenntnissen, welche der verwalteten Endgeräte (E) jeweils in einem bandbreitenunkritischen Bereich (B1..B3) angeordnet sind,
- bei dem bei einer Verbindungssignalisierung zwischen zwei Endgeräten (E) ein betroffener Netzagent (NA) eine echtzeitkritische Verbindung (V) identifiziert und
-- die Verbindung (V) initialisiert wird, sofern die betroffenen Endgeräte (E) in demselben bandbreitenunkritischen Bereich (B1..B3) angeordnet sind, oder
-- durch den jeweiligen Netzagenten (NA) die angeforderte Bandbreite ermittelt und eine Ressourcenanfrage (an) an einen Bandbreitenbroker (BB) gerichtet wird, der mit Hilfe einer Topologiefunktion (TF) und Kenntnissen über durch bestehende Verbindungen belegte Bandbreiten die Verfügbarkeit der angeforderten Bandbreite (B) im Kommunikationsnetz (PN) überprüft.

2. Verfahren nach Anspruch 1, **dadurch gekennzeichnet,**
**dass** das Kommunikationsnetz (PN) in Teilbereiche (TB) unterteilt und diesen jeweils ein Bandbreitenbroker (BB) zugeordnet ist,
**dass** eine Ressourcenanfrage (an), bei der die zu initialisierende Verbindung (V) über den zugeordneten Teilbereich (TB) hinaus geführt wird, an einen übergeordneten Bandbreitenbroker (BBN) geleitet wird, und dass mit Hilfe einer weiteren Topologiefunktion (TF) die in die Verbindung (V) einbezogenen Teilbereiche (TB) ermittelt werden, und dass die Bandbreitenbroker (BB) der ermittelten Teilbereiche (TB) hinsichtlich der Verfügbarkeit der angeforderten Bandbreite der Verbindung (V) parallel angefragt werden.

3. Verfahren nach Anspruch 1 oder 2, **dadurch gekennzeichnet, dass** dem anfragenden Endgerät (E) die Verfügbarkeit (v) oder Nichtverfügbarkeit (nv) der angeforderten Bandbreite mitgeteilt wird und in Abhängigkeit von der Mitteilung die Verbindung (V) initialisiert oder nicht initialisiert wird.

4. Verfahren nach einem der Ansprüche 1 bis 3, **dadurch gekennzeichnet,**
**dass** bei einer Verfügbarkeit der angeforderten Bandbreite diese in den verwalteten Bandbreitenumfang der bestehenden Verbindungen einbezogen wird.

5. Verfahren nach Anspruch 4, **dadurch gekennzeichnet,**
**dass** die einbezogene Bandbreite nach einem Ende der Verbindung (V) aus dem Bandbreitenumfang der bestehenden Verbindungen entfernt wird.

6. Verfahren nach einem der vorhergehenden Ansprüche, **dadurch gekennzeichnet,**
**dass** in den Bandbreitenbrokern (BB) die bandbreitenkritischen Bereiche (B4..B5) des Kommunikationsnetzes (PN) hinsichtlich der Verfügbarkeit der angeforderten Bandbreiten überprüft werden.

7. Verfahren nach Anspruch 6, **dadurch gekennzeichnet,**
**dass** die bandbreitenkritischen Bereiche (B4..B5) des Kommunikationsnetzes (PN) durch Verbindungswege zwischen den Bereichen (B) des Kommunikationsnetzes (PN) oder durch Bereiche (B) mit einem eingeschränkten Bandbreitenumfang repräsentiert sind.

8. Verfahren nach einem der vorhergehenden Ansprüche, **dadurch gekennzeichnet,**
**dass** die bandbreitenunkritischen Bereiche (B1..B3) im Kommunikationsnetz (PN) durch Bereiche (B) repräsentiert sind, bei denen mögliche, durch die zugeordneten Endgeräte (E) anforderbare Bandbreiten ohne Überprüfung verfügbar sind.

9. Verfahren nach einem der vorhergehenden Ansprüche, **dadurch gekennzeichnet,**
**dass** die angeforderte Bandbreite für eine zu initialisierende Verbindung (V) nach Auswertung der in einem Verbindungsinitialisierungspaket enthaltenen Information ermittelt wird.

10. Verfahren nach Anspruch 9, **dadurch gekennzeichnet,**
**dass** bei einem paketorientierten Kommunikationsnetz (PN) mit SIP-Protokoll die angeforderte Bandbreite aus der SIP- und darin eingebetteten SDP-spezifischen Signalisierungsinformation ermittelt wird.

11. Verfahren nach einem der vorhergehenden Ansprüche, **dadurch gekennzeichnet,**
**dass** die Topologiefunktionen (TF) in den Bandbreitenbrokern (BB) und dem übergeordneten Bandbreitenbroker (BBN) durch ein Netzmodell (NM) des Kommunikationsnetzes (PN) realisiert ist, wobei das Netzmodell (NM) mit Hilfe des Kommunikationsnetzes (PN) und/oder den Bandbreitenbrokern (BB) aktualisiert wird.

12. Verfahren nach Anspruch 11, **dadurch gekennzeichnet,**
**dass** das Netzmodell (NM) regelmäßig, unregelmäßig, bei Bedarf oder bei Änderungen der Netzkonfiguration aktualisiert wird.

13. Verfahren nach einem der vorhergehenden Ansprüche, **dadurch gekennzeichnet,**
**dass** die Initialisierung einer Verbindung (V) durch eine eine logische Verbindung initialisierende Signalisierung repräsentiert ist.

14. Verfahren nach Anspruch 13, **dadurch gekennzeichnet,**
**dass** die Ressourcenanfrage (an) durch den Netzagenten (NA) übermittelt wird, der dem Ziel-Endgerät (E) zugeordnet ist.

15. Verfahren nach Anspruch 1,
- bei dem einem Netzübergangsbereich (GW) ein Netzübergangsagent (NAÜ) zugeordnet ist,
- bei dem eine den Netzübergangsbereich (GW) betreffenden, echtzeitkritische Verbindungssignalisierung identifiziert wird,
- bei dem durch den jeweiligen Netzübergangsagenten (NAÜ) die Ressourcenanfrage (an) für die durch die aufzubauende Verbindung (V) betroffenen Bereich (B) des Netzes (PN) an den Bandbreitenbroker (BB) gerichtet wird.

16. Netzagent (NA) zum Verwalten der verfügbaren Bandbreite für Verbindungen (V) zwischen Endgeräten (E) eines paketorientierten Kommunikationsnetzes (PN), mit
- Mitteln, um bei der Verbindungssignalisierung echtzeitkritische Verbindungen (V) zwischen zwei Endgeräten (E) zu identifizieren,
- Mitteln zur Verwaltung einer Anzahl von Endgeräten (E), mit Kenntnissen, welche der verwalteten Endgeräte (E) jeweils in einem bandbreitenunkritischen Bereich (B1..B3) angeordnet sind,
- Mitteln zur Weiterbehandlung der Verbindungssignalisierung, sofern die betroffenen Endgeräte (E) in demselben bandbreitenunkritischen Bereich (B1..B3) angeordnet sind, oder
- Mitteln zur Ermittlung der angeforderten Bandbreite und zur Formulierung und Übermittlung einer Ressourcenanfrage (an) an einen Bandbreitenbroker (BB), der mit Hilfe einer Topologiefunktion (TF) und Kenntnissen über durch bestehende Verbindungen belegte Bandbreite die Verfügbarkeit der angeforderten Bandbreite im Kommunikationsnetz (PN) überprüft.

17. Netzagent nach Anspruch 16, wobei das Kommunikationsnetz (PN) in Teilbereiche (TB) unterteilt und diesen jeweils ein Bandbreitenbroker (BB) zugeordnet ist,
- mit Mitteln zum Übermitteln einer Ressourcenanfrage (an) an einen übergeordneten Bandbreitenbroker (BBN), sofern die zu initialisierende Verbindung (V) über den zugeordneten Teilbereich (TB) hinaus geführt wird,
- mit Mitteln zum Ermitteln der in die Verbindung einbezogenen Teilbereiche (TB) mit Hilfe einer weiteren Topologiefunktion (TF),
- und mit Mitteln zum parallelen Anfragen der Bandbreitenbroker (BB) der ermittelten Teilbereiche (TB) hinsichtlich der Verfügbarkeit der angefragten Bandbreite.

18. Netzagent nach einem der Ansprüche 16 oder 17,
- mit Mitteln zum Einbeziehen in den verwalteten Bandbreitenumfang der bestehenden Verbindungen bei einer Verfügbarkeit der angeforderten Bandbreite
- und Mitteln zum Entfernen der einbezogenen Bandbreite aus dem Bandbreitenumfang der bestehenden Verbindungen nach einem Ende der Verbindung.

19. Netzagent nach einem der Ansprüche 16 bis 18,
- mit Mitteln zum Abbilden der bandbreitenkritischen Bereiche (B4..B5) des Kommunikationsnetzes (PN) als Verbindungswege zwischen den Bereichen (B) des Kommunikationsnetzes (PN) oder als Bereiche (B) mit einem eingeschränkten Bandbreitenumfang,
- und Mitteln zum Abbilden der bandbreitenunkritischen Bereiche (B1..B3) im Kommunikationsnetz (PN) als Bereiche (B), bei denen mögliche, durch die zugeordneten Endgeräte (E) anforderbare Bandbreite ohne Überprüfung verfügbar ist.

20. Kommunikationsnetz (PN) mit einem Bandbreitenbroker (BB) und einem Netzagenten (NA) zum Verwalten der verfügbaren Bandbreite für Verbindungen (V) zwischen Endgeräten (E) des paketorientierten Kommunikationsnetzes (PN),
- wobei der Netzagent (NA) jeweils ausgebildet ist, mit Kenntnissen, welche der verwalteten Endgeräte (E) jeweils in einem bandbreitenunkritischen Bereich (B1..B3) angeordnet sind, eine Anzahl von Endgeräten (E) zu verwalten, die Verbindungssignalisierung echtzeitkritischer Verbindungen (V) zwischen zwei Endgeräten (E) zu identifizieren, und die Verbindung (V) zu initialisieren, sofern die betroffenen Endgeräte (E) in demselben bandbreitenunkritischen Bereich (B1..B3) angeordnet sind, oder die angeforderte Bandbreite zu ermitteln und eine Ressourcenanfrage (an) an den Bandbreitenbroker(BB) zu formulieren und zu übermitteln,
- wobei der Bandbreitenbroker(BB) Mittel aufweist zur Überprüfung der Verfügbarkeit der angeforderten Bandbreite im Kommunikationsnetz (PN) mit Hilfe einer Topologiefunktion (TF) und Kenntnissen über durch bestehende Verbindungen belegte Bandbreite.

## Claims

1. Method for managing the available bandwidth for connections between terminals of a packet-oriented communication network,
- in which in each case a number of terminals (E) are managed by network agents (NA) which have knowledge about which of the managed terminals (E) in each case are arranged in a bandwidth-noncritical area (B1..B3),
- in which, in the case of a connection signaling between two terminals (E), a concerned network agent (NA) identifies a real time critical connection (V), and
-- the connection (V) is initialized, to the extent that the terminals (E) concerned are arranged in the same bandwidth-noncritical area (B1..B3), or
-- by means of the respective network agents (NA), the requested bandwidth is determined, and a resource request (an) is directed to a bandwidth broker (BB) which, by means of which a topology function (TF) and knowledge about the bandwidths occupied by existing connections, verifies the availability of the requested bandwidth (B) in the communication network (PN).

2. Method according to Claim 1, **characterized in**
**that** the communication network (PN) is subdivided into sub-areas (TB) and a bandwidth broker (BB) is associated with each of said sub-areas,
in that a resource query (an), for which the connection (V) to be initialized is led out via the associated sub-area (TB), is routed to a higher-order bandwidth broker (BBN), and in that, by means of an additional topology function (TF), the sub-areas (TB) included in the connection (V) are determined, and in that the bandwidth brokers (BB) of the determined sub-areas (TB) are queried in parallel with regard to the availability of the requested bandwidth of the connection (V).

3. Method according to Claim 1 or 2, **characterized in**
**that** the availability (v) or unavailability (nv) of the requested bandwidth is communicated to the querying terminal (E), and depending on the message, the connection (V) is or is not initialized.

4. Method according to any one of Claims 1 to 3, **characterized in**
**that**, in the case of availability of the requested bandwidth, the latter is included in the managed bandwidth extent of the existing connections.

5. Method according to Claim 4, **characterized in**
**that** the included bandwidth is removed after an end of the connection (V) from the bandwidth extent of the existing connections.

6. Method according to any one of the preceding claims, **characterized in**
**that**, in the bandwidth brokers (BB), the bandwidth-critical areas (B4..B5) of the communication network (PN) are verified with regard to the availability of the requested bandwidths.

7. Method according to Claim 6, **characterized in**
**that** the bandwidth-critical areas (B4..B5) of the communication network (PN) are represented by connection paths between the areas (B) of the communication network (PN) or by areas (B) with a restricted bandwidth extent.

8. Method according to any one of the preceding claims, **characterized in**
**that** the bandwidth-noncritical areas (B 1..B3) in the communication network (PN) are represented by areas (B) in which possible bandwidths that can be requested by the associated terminals (E) are available without verification.

9. Method according to any one of the preceding claims, **characterized in**
**that** the requested bandwidth for a connection (V) to be initialized is determined after evaluation of the information contained in a communication initialization packet.

10. Method according to Claim 9, **characterized in**
**that**, in a packet-oriented communication network (PN) with SIP protocol, the requested bandwidth is determined from the SIP-specific signaling information and the SDP-specific signaling information embedded therein.

11. Method according to any one of the preceding claims, **characterized in**
**that** the topology functions (TF) in the bandwidth brokers (BB) and in the higher-order bandwidth broker (BBN) are implemented by a network model (NM) of the communication network (PN), wherein the network model (NM) is updated by means of the communication network (PN) and/or the bandwidth brokers (BB).

12. Method according to Claim 11, **characterized in**
**that** the network model (NM) is updated regularly, irregularly, as needed, or in the case of changes in the network configuration.

13. Method according to any one of the preceding claims, **characterized in**
**that** the initialization of a connection (V) is represented by a signaling that initializes a logic connection.

14. Method according to Claim 13, **characterized in**
**that** the resource request (an) is transmitted by the network agent (NA) that is associated with the target terminal (E).

15. Method according to Claim 1,
- in which a network transition agent (NAÜ) is associated with a network transition area (GW),
- in which a real time critical connection signaling concerning the network transition area (GW) is identified,
- in which the resource request (an) for the area (B) of the network (PN), which is concerned by the connection (V) to be set up, is directed by the respective network transition agent (NAU) to the bandwidth broker (BB).

16. Network agent (NA) for managing the available bandwidth for connections (V) between terminals (E) of a packet-oriented communication network (PN), with
- means for identifying, in the connection signaling, real time critical connections (V) between two terminals (E),
- means for managing a number of terminals (E), having knowledge about which ones of the managed terminals (E) in each case are arranged in a bandwidth-noncritical area (B 1..B3),
- means for further processing the connection signaling, to the extent that the concerned terminals (E) are arranged in the same bandwidth-noncritical area (B1..B3), or
- means for determining the requested bandwidth and for formulating and transmitting a resource request (an) to a bandwidth broker (BB) which, by means of a topology function (TF) and knowledge about the bandwidth occupied by existing connections, verifies the availability of the requested bandwidth in the communication network (PN).

17. Network agent according to Claim 16, wherein the communication network (PN) is subdivided into sub-areas (TB), and a bandwidth broker (BB) is associated with each one of said sub-areas,
- with means for transmitting a resource request (an) to a higher-order bandwidth broker (BBN), to the extent that the connection (V) to be initialized is let out via the associated sub-area (TB),
- with means for determining the sub-areas (TB) included in the connection, by means of an additional topology function (TF),
- and with means for the parallel requesting of the bandwidth brokers (BB) of the determined sub-areas (TB) with regard to the availability of the requested bandwidth.

18. Network agent according to either Claim 16 or 17,
- with means for including the existing bandwidth in the managed bandwidth extent of the existing connections, in the case of availability of the requested bandwidth,
- and means for removing the included bandwidth from the bandwidth extent of the existing connections after the end of a connection.

19. Network agent according to any one of Claims 16 to 18,
- with means for representing the bandwidth-critical areas (B4..B5) of the communication network (PN) as connection paths between the areas (B) of the communication network (PN) or as areas (B) with a restricted bandwidth extent,
- and means for representing the bandwidth-noncritical areas (B 1..B3) in the communication network (PN) as areas (B) in which possible bandwidth that can be requested by the associated terminals (E) is available without verification.

20. Communication network (PN) with a bandwidth broker (BB) and a network agent (NA) for managing the available bandwidth for connections (V) between terminals (E) of the packet-oriented communication network (PN),
- wherein the network agent (NA) is designed in each case, with knowledge about which ones of the managed terminals (E) in each case are arranged in a bandwidth-noncritical area (B1..B3), to manage a number of terminals (E), to identify the connection signaling of real time critical connections (V) between two terminals (E), and to initialize the connection (V), to the extent that the concerned terminals (E) are arranged in the same bandwidth-noncritical area (B 1..B3), or to determine the requested bandwidth and to formulate and transmit a resource request (an) to the bandwidth broker (BB),
- wherein the bandwidth broker (BB) has means for verifying the availability of the requested bandwidth in the communication network (PN) by means of a topology function (TF) and knowledge about bandwidth occupied by existing connections.

## Revendications

1. Procédé pour gérer la bande passante disponible pour des connexions entre des terminaux d'un réseau de communication orienté par paquets,
- dans lequel dans chaque cas, un nombre de terminaux (E) sont gérés par des agents de réseau (NA) qui savent lesquels des terminaux gérés (E) dans chaque cas sont agencés dans une zone non critique de bande passante (B1..B3),
- dans lequel, dans le cas d'une signalisation de connexion entre deux terminaux (E), un agent de réseau (NA) concerné identifie une connexion critique en temps réel (V), et
-- la connexion (V) est initialisée, dans la mesure où les terminaux (E) concernés sont agencés dans la même zone non critique de bande passante (B 1..B3), ou
-- grâce aux agents de réseau (NA) respectifs, la bande passante requise est déterminée, et une demande de ressource (an) est transmise à un gestionnaire de bande passante (BB) qui, grâce à une fonction de topologie (TF) et une connaissance sur les bandes passantes occupées par les connexions existantes, vérifie la disponibilité de la bande passante (B) requise dans le réseau de communication (PN).

2. Procédé selon la revendication 1, **caractérisé en ce que**
le réseau de communication (PN) est subdivisé en sous-zones (TB) et un gestionnaire de bande passante (BB) est associé à chacune desdites sous-zones,
une demande de ressource (an), pour laquelle la connexion (V) devant être initialisée est conduite via la sous-zone (TB) associée, est acheminée vers un gestionnaire de bande passante d'ordre supérieur (BBN), et **en ce que**, grâce à une fonction de topologie (TF) additionnelle, les sous-zones (TB) incluses dans la connexion (V) sont déterminées, et **en ce que** les gestionnaires de bande passante (BB) des sous-zones déterminées (TB) sont interrogés en parallèle concernant la disponibilité de bande passante requise de la connexion (V).

3. Procédé selon la revendication 1 ou 2, **caractérisé en ce que**
la disponibilité (v) ou l'indisponibilité (nv) de la bande passante requise est communiquée au terminal d'interrogation (E), et selon le message, la connexion (V) est ou n'est pas initialisée.

4. Procédé selon l'une quelconque des revendications 1 à 3, **caractérisé en ce que**
en cas de disponibilité de la bande passante requise, cette dernière est incluse dans l'étendue de bande passante gérée des connexions existantes.

5. Procédé selon la revendication 4, **caractérisé en ce que**
la bande passante incluse est supprimée une fois terminée la connexion (V) de l'étendue de bande passante des connexions existantes.

6. Procédé selon l'une quelconque des revendications précédentes, **caractérisé en ce que** dans les gestionnaires de bande passante (BB), les zones critiques de bande passante (B4..B5) du réseau de communication (PN) sont vérifiées concernant à la disponibilité des bandes passantes requises.

7. Procédé selon la revendication 6, **caractérisé en ce que**
les zones critiques de bande passante (B4..B5) du réseau de communication (PN) sont représentées par des chemins de connexion entre les zones (B) du réseau de communication (PN) ou par des zones (B) ayant une étendue de bande passante limitée.

8. Procédé selon l'une quelconque des revendications précédentes, **caractérisé en ce que**
les zones non critiques de bande passante (B1..B3) dans le réseau de communication (PN) sont représentées par des zones (B) dans lesquelles les bandes passantes possibles qui peuvent être requises par les terminaux (E) associés sont disponibles sans vérification.

9. Procédé selon l'une quelconque des revendications précédentes, **caractérisé en ce que**
la bande passante requise pour une connexion (V) devant être initialisée est déterminée après évaluation des informations contenues dans un paquet d'initialisation de communication.

10. Procédé selon la revendication 9, **caractérisé en ce que**
dans un réseau de communication orienté par paquets (PN) ayant un protocole SIP, la bande passante requise est déterminée à partir des informations de signalisation spécifiques au SIP et des informations de signalisation spécifiques au SDP qui y sont intégrées.

11. Procédé selon l'une quelconque des revendications précédentes, **caractérisé en ce que**
les fonctions de topologie (TF) dans les gestionnaires de bande passante (BB) et dans le gestionnaire de bande passante d'ordre supérieur (BBN) sont mises en oeuvre par un modèle de réseau (NM) du réseau de communication (PN), dans lequel le modèle de réseau (NM) est mis à jour au moyen du réseau de communication (PN) et/ou des gestionnaires de bande passante (BB).

12. Procédé selon la revendication 11, **caractérisé en ce que**
le modèle de réseau (NM) est mis à jour régulièrement, irrégulièrement, selon les besoins ou en cas de changements dans la configuration du réseau.

13. Procédé selon l'une quelconque des revendications précédentes, **caractérisé en ce que**
l'initialisation d'une connexion (V) est représentée par une signalisation qui initialise une connexion logique.

14. Procédé selon la revendication 13, **caractérisé en ce que**
la demande de ressource (an) est transmise par l'agent de réseau (NA) qui est associé au terminal cible (E).

15. Procédé selon la revendication 1,
- dans lequel un agent de transition de réseau (NAÜ) est associé à une zone de transition de réseau (GW),
- dans lequel une signalisation de connexion critique en temps réel concernant la zone de transition de réseau (GW) est identifiée,
- dans lequel la demande de ressource (an) pour la zone (B) du réseau (PN), qui est concernée par la connexion (V) devant être établie, est dirigée par l'agent de transition de réseau (NAÜ) respectif vers le gestionnaire de bande passante (BB).

16. Agent de réseau (NA) pour gérer la bande passante disponible pour des connexions (V) entre des terminaux (E) d'un réseau de communication orienté par paquets (PN), comprenant
- des moyens pour identifier, dans la signalisation de connexion, des connexions critiques en temps réel (V) entre deux terminaux (E),
- des moyens pour gérer un nombre de terminaux (E), sachant lesquels des terminaux gérés (E) dans chaque cas sont agencés dans une zone non critique de bande passante (B 1..B3),
- des moyens pour traiter en outre la signalisation de connexion, dans la mesure où les terminaux (E) concernés sont agencés dans la même zone non critique de bande passante (B1..B3), ou
- des moyens pour déterminer la bande passante requise et pour formuler et transmettre une demande de ressource (an) à un gestionnaire de bande passante (BB) qui, grâce à une fonction de topologie (TF) et une connaissance sur la bande passante occupée par les connexions existantes, vérifient la disponibilité de bande passante (B) requise dans le réseau de communication (PN).

17. Agent de réseau selon la revendication 16, dans lequel le réseau de communication (PN) est subdivisé en sous-zones (TB), et un gestionnaire de bande passante (BB) est associé à chacune desdites sous-zones,
- doté de moyens pour transmettre une demande de ressource (an) à un gestionnaire de bande passante d'ordre supérieur (BBN), dans la mesure où la connexion (V) devant être initialisée est conduite via la sous-zone (TB) associée,
- doté de moyens pour déterminer les sous-zones (TB) incluses dans la connexion, à l'aide d'une fonction de topologie (TF) additionnelle,
- et doté de moyens pour la demande parallèle des gestionnaires de bande passante (BB) des sous-zones (TB) déterminées selon la disponibilité de la bande passante requise.

18. Agent de réseau selon l'une ou l'autre de la revendication 16 ou 17,
- doté de moyens pour inclure la bande passante existante dans l'étendue de bande passante gérée des connexions existantes, dans le cas de la disponibilité de la bande passante requise,
- et de moyens pour supprimer la bande passante incluse de l'étendue de bande passante des connexions existantes une fois la connexion terminée.

19. Agent de réseau selon l'une quelconque des revendications 16 à 18,
- doté de moyens pour représenter les zones critiques de bande passante (B4..B5) du réseau de communication (PN) comme des chemins de connexion entre les zones (B) du réseau de communication (PN) ou comme des zones (B) ayant une étendue de bande passante limitée,
- et de moyens pour représenter les zones non critiques de bande passante (B 1..B3) dans le réseau de communication (PN) comme des zones (B) dans lesquelles une bande passante possible qui peut être requise par les terminaux (E) associés est disponible sans vérification.

20. Réseau de communication (PN) doté d'un gestionnaire de bande passante (BB) et d'un agent de réseau (NA) pour gérer la bande passante disponible pour des connexions (V) entre des terminaux (E) du réseau de communication orienté par paquets (PN),
- dans lequel l'agent de réseau (NA) est conçu dans chaque cas, sachant lesquels des terminaux gérés (E) sont dans chaque cas agencés dans une zone non critique de bande passante (B1..B3), pour gérer un nombre de terminaux (E), pour identifier la signalisation de connexion des connexions critiques en temps réel (V) entre deux terminaux (E), et pour initialiser la connexion (V), dans la mesure où les terminaux (E) concernés sont agencés dans la même zone non critique de bande passante (B1..B3), ou pour déterminer la bande passante requise et pour formuler et transmettre une demande de ressource (an) au gestionnaire de bande passante (BB),
- dans lequel le gestionnaire de bande passante (BB) possède des moyens pour vérifier la disponibilité de la bande passante requise dans le réseau de communication (PN) à l'aide d'une fonction de topologie (TF) et de la connaissance sur la bande passante occupée par les connexions existantes.
